# EUROPÄISCHE PATENTSCHRIFT

(11) **EP 2 306 106 B1**
(45) Veröffentlichungstag und Bekanntmachung des Hinweises auf die Patenterteilung: **23.11.2016**
(21) Anmeldenummer: 10185578.1
(22) Anmeldetag: 23.09.2003
(51) Int. Cl.: F24F 12/00, F24F 11/00, F28F 27/02

(54) **Luftaustauschsystem für die Belüftung wenigstens eines Raums eines Gebäudes**
Air-exchange system for the ventilation of at least one room in a building
Système de renouvellement d'air pour aérer au moins une pièce dans un bâtiment

(30) Priorität: 24.09.2002 DE 20214833 U
(43) Veröffentlichungstag der Anmeldung: 06.04.2011
(62) Teilanmeldung aus: 03021155.1
(73) Patentinhaber: Meltem Wärmerückgewinnung GmbH & Co. KG, 82239 Alling (DE)
(72) Erfinder: REYNARTZ, Armin, 82239 Alling (DE)
(74) Vertreter: Schweiger, Martin

(56) Entgegenhaltungen:
- WO-A-01/84057
- CH-A5- 599 510
- US-A- 4 284 236

## Beschreibung

Die Erfindung betrifft ein Luftaustauschsystem für die Belüftung wenigstens eines Raums eines Gebäudes mit wenigstens einer Luftaustauschvorrichtung.

Zur Gewährleistung gleichbleibend hoher Atemluftqualität in Wohn- und Arbeitsräumen von Gebäuden wird oft ein Luftaustausch mit der Umwelt erzwungen. Dabei wird kühlere, unverbrauchte Außenluft in das Gebäudeinnere gefördert und gleichzeitig wärmere, verbrauchte Abluft aus dem Gebäudeinneren nach draußen gefördert. Aus Energieeffizienzgründen kann die Wärmeenergie der Abluft dazu verwendet werden, um die hineinströmende Außenluft zu erwärmen.

Dabei kommen Wärmetauscher zum Einsatz, die Wärme in Richtung eines Temperaturgefälles zwischen den zwei Luftströmen übertragen. Es sind Rohrbündel-, Rippenrohr-, Platten-, Spiral-, Spiralrohr-Doppelmantel- und Wickelwärmetauscher bekannt. Solche Wärmetauscher sind häufig Bestandteile von Luftaustauschvorrichtungen, die auch als Rekuperatoren oder als Rekuperativgeräte bezeichnet werden.

Bei Gebäudeabschnitten mit mehreren Räumen, bei denen ein Luftaustausch mittels einer dezentralen Luftaustauschvorrichtung mit einem Wärmetauscher vorgenommen wird, ergibt sich oft das Problem, daß dieser Luftaustausch nicht zufriedenstellend ist. Besonders diejenigen Räume, in denen sich die Luftaustauschvorrichtung nicht unmittelbar befindet, werden häufig nur unzureichend mit frischer und unverbrauchter Luft versorgt.

Es ist daher Aufgabe der Erfindung, ein einfach handzuhabendes Luftaustauschsystem mit gutem Wirkungsgrad anzugeben, bei dem in allen zu belüftenden Räumen ein ausreichender Luftaustausch stattfindet.

Diese Aufgabe wird durch den Gegenstand des unabhängigen Anspruchs gelöst. Vorteilhafte Ausgestaltungen ergeben sich aus den Unteransprüchen.

Aus der US 4 248 236 ist ein Klimatisierungssystem für ein Gebäude mit mehreren Räumen, insbseondere für Werkstätten bekannt. Dieses Klimatisierungssystem weist eine Klimaanlage mit einem Zuluftlüfter und eine Abluftbehandlungsanlage mit einem Abluftlüfter auf. Ein Wärmetauscher der Abluftbehandlungsanlage ist über ein Rückkopplungsrohr mit einem Wärmetauscher der Klimaanlage verbunden.

Aus der CH 599 510 ist eine Vorrichtung zur Wärmerückgewinnung, insbesondere für ein Schwimmbad, bekannt. Diese Vorrichtung weist eine erste Wärmetauscherstufe mit einem Wärmetauscher, einem Zuluftlüfter und einem Abluftlüfter auf und eine zweite Wärmetauscherstufe, in der verschiedene Abluftströme zur Erhitzung von Frischwasser verwendet werden.

Ein weiteres Luftaustauschsystem ist aus WO 01/84057 A1 bekannt.

Gemäß einem Grundgedanken der Erfindung sorgt jede in dem Luftaustauschsystem vorgesehene Luftaustauschvorrichtung bereits für sich allein genommen für einen Abtransport von verbrauchter Fortluft sowie für ein Einströmen von frischer Zuluft. Gemäß einem weiteren Grundgedanken der Erfindung entsteht eine Luftbewegung zwischen derjenigen Luftaustauschvorrichtung, die lediglich einen Zuluft-Lüfter aufweist und derjenigen Luftaustauschvorrichtung, die lediglich einen Fortluft-Lüfter umfaßt. Diese Luftbewegung ist von der Luftaustauschvorrichtung mit dem Zuluft-Lüfter zu der Luftaustauschvorrichtung mit dem Fortluft-Lüfter gerichtet. Durch diese Luftbewegung wird sichergestellt, daß auch Bereiche, die nicht in unmittelbarer Nähe der Luftaustauschvorrichtungen liegen, mit frischer Außenluft versorgt werden.

Durch ein derartiges Luftaustauschsystem wird ein zufriedenstellender Luftaustausch mit einem guten Wirkungsgrad erreicht.

Ein weiterer Grundgedanke der Erfindung besteht darin, daß bei wenigstens einer Luftaustauschvorrichtung der Zuluft-Lüfter und der Fortluft-Lüfter so ein-stellbar sind, daß der Zuluftstrom größer als der Fortluftstrom ausgebildet ist und daß bei wenigstens einer weiteren Luftaustauschvorrichtung der Zuluft-Lüfter und der Fortluft-Lüfter so einstellbar sind, daß der Fortluftstrom größer als der Zuluftstrom ausgebildet ist. Durch eine derartige Einstellbarkeit der Volumenströme der durch den Zuluft-Lüfter und durch den Fortluft-Lüfter geförderten Luftmengen kann der Luftaustausch der einzelnen Luftaustauschvorrichtungen und somit der Luftaustausch des Luftaustauschsystems individuell an die Umgebung angepaßt werden. Zusätzlich zu demjenigen Luftaustausch, den jede Luftaustauschvorrichtung für sich allein gesehen tätigt, wird eine Luftbewegung zwischen den einzelnen Luftaustauschvorrichtungen erzeugt. Dadurch wird ein Luftaustausch auch in denjenigen Bereichen sichergestellt, die sich nicht in unmittelbarer Umgebung einer der Luftaustauschvorrichtungen befinden.

Die Intensität der Luftbewegung zwischen den einzelnen Luftaustauschvorrichtungen kann durch eine Veränderung der Drehfrequenzen der Lüfter und/oder der Anstellwinkel der Lüfterblätter genau und bedarfsgerecht eingestellt werden.

Bei einer einfachen Version des erfindungsgemäßen Luftaustauschsystems, die zwei Luftaustauschvorrichtungen umfaßt, kann die erste Luftaustauschvorrichtung beispielsweise mit einem Verhältnis des Fortluftstromvolumens zum Zuluftstromvolumen von 40%/60% und die zweite Luftaustauschvorrichtung beispielsweise mit einem Verhältnis des Fortluftstromvolumens zum Zuluftstromvolumen von 60%/40% betrieben werden. Eine Richtungsänderung der Luftbewegung zwischen den Luftaustauschvorrichtungen kann dadurch erreicht werden, indem das Verhältnis des Fortluftstromvolumens zu dem Zuluftstromvolumen bei beiden Luftaustauschvorrichtungen umgekehrt wird.

Von der Erfindung sind auch Luftaustauschsysteme umfaßt, die drei oder mehr Luftaustauschvorrichtungen aufweisen. Solche Luftaustauschsysteme werden auch als Netzwerkversionen bezeichnet.

Die Erfindung betrifft auch ein vorstehend beschriebenes Luftaustauschsystem mit wenigstens einer Außenwand des Gebäudes. Dabei sind die Gehäuserückseiten der Luftaustauschvorrichtungen an wenigstens einer Außenwand des Gebäudes angebracht. An bzw. in der Außenwand sind Rohrverbindungen vorgesehen, die sich bis zu der Außenseite des Gebäudes erstrecken. Über diese Rohrverbindungen kann frische unverbrauchte Außenluft in die Luftaustauschvorrichtungen hinein und verbrauchte Fortluft aus den Luftaustauschvorrichtungen auf die Außenseite des Gebäudes gelangen. Mit derart angebrachten Luftaustauschvorrichtungen wird ein direkter und effektiver Luftaustausch der verbrauchten Abluft mit frischer Außenluft erreicht.

Gemäß einer ersten Ausführungsform der Erfindung ist wenigstens eine Luftaustauschvorrichtung an einer ersten Außenwand und wenigstens eine weitere Luftaustauschvorrichtung an einer zweiten Außenwand angebracht. Wenn diese beiden Wände einander gegenüberliegen, so wird der zwischen den beiden Wänden liegende Gebäudeabschnitt kontinuierlich mit frischer und erwärmter Zuluft versorgt.

Befinden sich die erste Außenwand sowie die zweite Außenwand in unterschiedlichen Räumen des Gebäudes, so werden die zwischen den beiden Außenwänden liegenden Räume des Gebäudes ebenfalls kontinuierlich mit frischer erwärmter Außenluft durchspült. Hierbei ist sicherzustellen, daß die Luftbewegung zwischen diesen Räumen nicht beispielsweise durch eine geschlossene Tür unterbrochen wird.

Wenn zwischen der ersten Außenwand und der zweiten Außenwand wenigstens ein Durchgang, insbesondere eine Treppe, eine Tür oder ein Korridor und/oder wenigstens ein weiterer Raum angeordnet ist, so werden diese ebenfalls kontinuierlich mit frischer erwärmter Außenluft versorgt. Dies wird auch als Querlüftung bezeichnet.

Gemäß der Erfindung sind die Luftaustauschvorrichtungen mit einer Steuerungseinheit, insbesondere mit einem Computer, verbunden. Über diese Steuerungseinheit können die Drehfrequenzen der Lüfterräder und/oder die Anstellwinkel der Lüfterblätter für die Zuluft-Lüfter und für die Fortluft-Lüfter der einzelnen Luftaustauschvorrichtungen individuell und präzise eingestellt werden.

Die Erfindung ist in den Zeichnungen anhand eines Ausführungsbeispiels näher veranschaulicht.
- Figur 1: zeigt eine schematische Darstellung einer Draufsicht auf eine Luftaustauschvorrichtung gemäß einem Ausführungsbeispiel,
- Figur 2: zeigt eine schematische, perspektivische Darstellung des in Figur 1 gezeigten Plattenwärmetauschers sowie eine grafische Veranschaulichung der den Plattenwärmetauscher durchfließenden Luftströme gemäß dem Ausführungsbeispiel,
- Figur 3: zeigt eine schematische Darstellung eines Querschnitts entlang der Schnittlinie A-A einer an einer Außenwand befestigten Luftaustauschvorrichtung gemäß dem Ausführungsbeispiel,
- Figur 4: zeigt eine schematische Darstellung eines Querschnitts entlang der Schnittlinie B-B der an der Außenwand befestigten Luftaustauschvorrichtung gemäß dem Ausführungsbeispiel,
- Figur 5: zeigt einen schematischen Grundriß eines Gebäudeabschnitts mit drei an der Innenseite einer Außenwand dieses Gebäudeabschnitts befestigten in Figur 1 gezeigten Luftaustauschvorrichtungen gemäß einem ersten Ausführungsbeispiel,
- Figur 6: zeigt eine schematische Schnittdarstellung eines Wohnhauses mit einem Kamin und mit einem Schornstein sowie eine schematische Darstellung eines in diesem Wohnhaus befindlichen Luftaustauschsystems gemäß einem zweiten Ausführungsbeispiel.

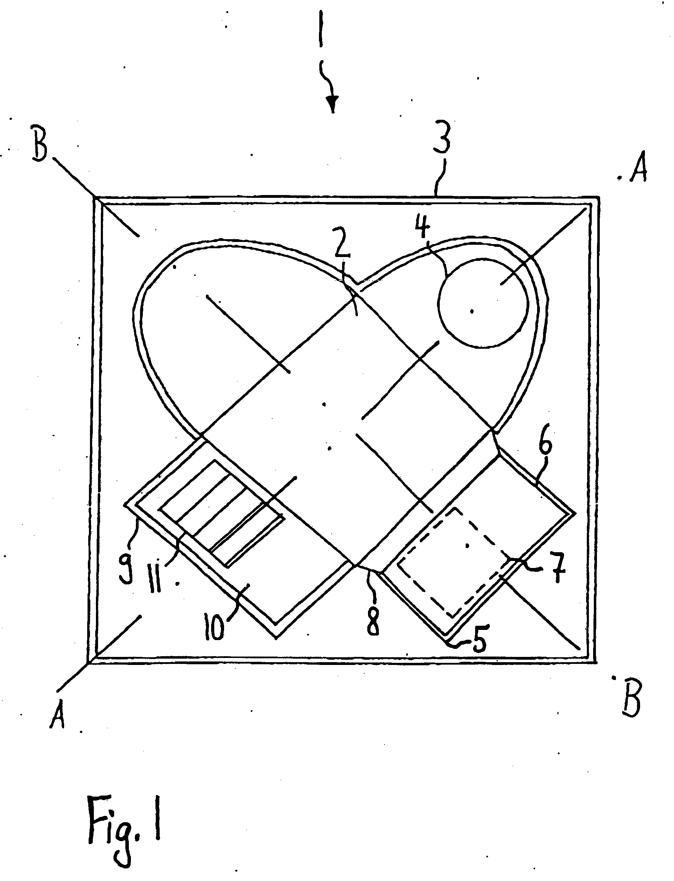

Figur 1 zeigt eine schematische Darstellung einer Draufsicht auf eine Luftaustauschvorrichtung 1 gemäß einem Ausführungsbeispiel.

Die Luftaustauschvorrichtung 1 ist von einem quadratischen Gehäuse 3 umschlossen. Bei der in Figur 1 gezeigten Draufsicht ist die Vorderseite des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Metall, wobei in der Draufsicht gemäß Figur 1 nur die oberste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist in einem Winkel von 45° bezogen auf das Gehäuse 3 gedreht angeordnet.

Oberhalb der rechten oberen Seite des Plattenwärmetauschers 2 ist eine kreisrunde Außenlufteinlaßöffnung 4 in der Unterseite des Gehäuses 3 vorgesehen. Um die Außenlufteinlaßöffnung 4 ist eine auf der Unterseite des Gehäuses 3 aufsetzende, gekrümmte Wand vorgesehen, die am oberen sowie am unteren Ende der rechten oberen Seite des Plattenwärmetauschers 2 abschließt.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt. In der hier nicht gezeigten Vorderseite des Gehäuses 3 ist eine Öffnung vorgesehen, die beim Aufsetzen der Vorderseite auf das Gehäuse 3 innerhalb dieser Wand angeordnet ist.

An der rechten unteren Seite des Plattenwärmetauschers 2 ist ein Fortluft-Lüftergehäuse 5 mit einem Fortluftradiallüfter 6 sowie ein zwischen dem Fortluftradiallüfter 6 und dem Plattenwärmetauscher 2 angeordneter Trichter 8 vorgesehen. Der Trichter 8 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30°. Auf der gesamten Breite des Auslaßseite des Trichters 8 setzt der Fortluftradiallüfter 6 an, von dem in der Draufsicht in Figur 1 lediglich die Verkleidung erkennbar ist. Die Drehachse des Fortluftradiallüfters 6 ist dabei senkrecht auf der Höhe der Mitte der rechten unteren Seite des Plattenwärmetauschers 2 ausgerichtet. Der Durchmesser bzw. die Breite des Fortluftradiallüfters 6 entspricht dabei in etwa der Auslaßseite des Trichters 8. Die Tiefe des Fortluftradiallüfters 6 entspricht ungefähr der Hälfte seiner Breite. Der Fortluftradiallüfter 6 ist von einem Fortluft-Lüftergehäuse 5 umschlossen, das auf seiner Unterseite eine in Figur 1 gestrichelt dargestellte, rechteckige Fortluftauslaßöffnung 7 aufweist. Diese Fortluftauslaßöffnung 7 ist dabei von der Mitte des Fortluftradiallüfters 6 ausgehend etwas nach rechts oben versetzt angeordnet.

An der linken unteren Seite des Plattenwärmetauschers 2 setzt ein von einem dünnwandigen Zuluft-Lüftergehäuse 9 umschlossener Zuluftansaugradiallüfter 10 an. Dabei ist die Drehachse des Zuluftansaugradiallüfters 10 orthogonal zu der linken unteren Seite des Plattenwärmetauschers 2 auf der Höhe deren Mitte angeordnet. Der Durchmesser bzw. die Breite des Zulaufansaugradiallüfters 10 entspricht in etwa der Seitenlänge des Plattenwärmetauschers 2, seine Tiefe entspricht ungefähr der Hälfte seiner Breite. In dem linken oberen Bereich des Zuluftansaugradiallüfters 10 ist eine rechteckige Zulufteinlaßöffnung angeordnet, durch die mehrere Lüfterschaufeln des Zuluftansaugradiallüfters 10 erkennbar sind. Diese sind im Ausführungsbeispiel parallel zur Drehachse des Zuluftansaugradiallüfters 10 angeordnet, können jedoch auch schräg zu dieser oder gekrümmt verlaufen.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

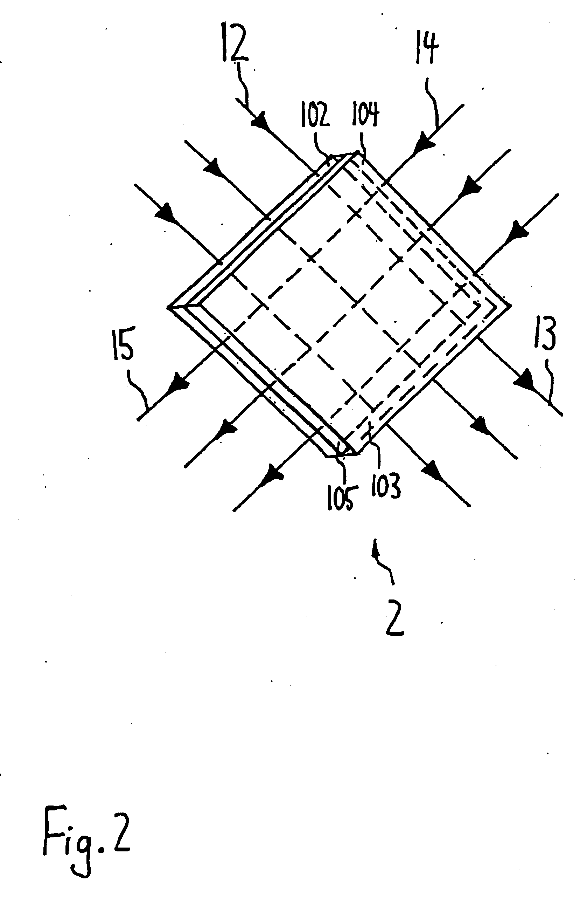

Figur 2 zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme gemäß dem Ausführungsbeispiel.

Der Plattenwärmetauscher 2 umfaßt drei übereinander angeordnete, quadratische Metallplatten, die in Figur 2 jeweils auf einer Ecke stehend dargestellt sind. Die untere und die mittlere Platte des Plattenwärmetauschers 2 weisen auf der linken oberen Seite einen schlitzartigen Warmlufteinlaß 102 und auf der rechten unteren Seite einen schlitzartigen Kaltluftauslaß 103 auf. Auf der linken unteren sowie auf der rechten oberen Seite ist die untere Platte mit der mittleren Platte des Plattenwärmetauschers 2 jeweils mit einer durchgehenden Wand verbunden. An der rechten oberen Seite des Plattenwärmetauschers 2 befindet sich zwischen der mittleren und der oberen Platte ein schlitzartiger Kaltlufteinlaß 104. An der linken unteren Seite des Plattenwärmetauschers 2 ist zwischen der mittleren und der oberen Platte des Plattenwärmetauschers 2 ein schlitzartiger Warmluftauslaß 105 vorgesehen. An der linken oberen sowie an der rechten unteren Seite des Plattenwärmetauschers 2 ist zwischen der mittleren und der oberen Platte jeweils eine Wand vorgesehen.

Gemäß der Darstellung in Figur 2 fließt ein Abluftstrom 12 in den Warmlufteinlaß 102 hinein, durchströmt den Plattenwärmetauscher 2 und tritt auf der gegenüberliegenden Seite als Fortluftstrom 13 aus dem Kaltluftauslaß 103 aus. Der dabei von dem Abluftstrom 12 durchflossene Bereich des Plattenwärmetauschers 2 wird auch als Abkühlseite bezeichnet. Ein Außenluftstrom 14 tritt durch den Kaltlufteinlaß 104 in den Plattenwärmetauscher 2 ein, durchströmt diesen und tritt als Zuluftstrom 15 auf der gegenüberliegenden Seite aus dem Warmluftauslaß 105 aus. Der dabei von dem Außenluftstrom 14 durchflossenen Bereich des Plattenwärmetauschers 2 wird auch Erwärmseite des Plattenwärmetauschers 2 genannt.

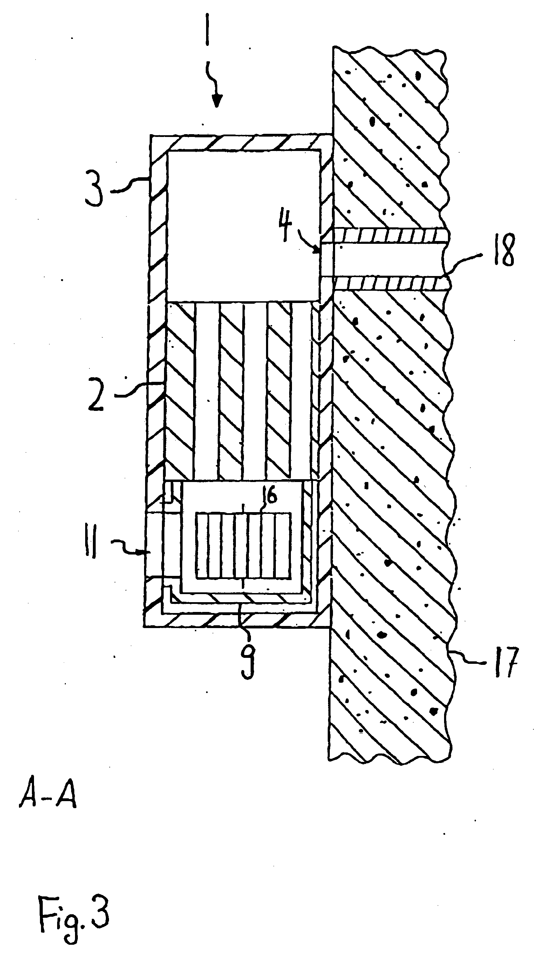

Figur 3 zeigt eine schematische Darstellung eines Querschnitts entlang der Schnittlinie A-A einer an einer Außenwand 17 befestigten Luftaustauschvorrichtung 1 gemäß dem Ausführungsbeispiel. In Figur 3 ist die Erwärmseite des Plattenwärmetauschers 2 betrachtet.

Die Luftaustauschvorrichtung 1 liegt mit der Rückseite ihres Gehäuses 3 an der Vorderseite der Außenwand 17 an und befindet sich dementsprechend im Gebäudeinneren. Aus der Querschnittsdarstellung in Figur 3 ist ersichtlich, daß die diagonale Höhe des Luftaustauschsystems 1 in etwa dem Dreifachen seiner Tiefe entspricht. Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 18 anschließt. In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. In dem Zuluftauslaßbereich ist ein Zuluft-Lüfterrad 16 innerhalb des Zuluft-Lüftergehäuses 9 angeordnet. Das Zuluft-Lüfterrad 16 ist dabei horizontal mittig angeordnet. Auf gleicher Höhe mit den Lüfterschaufeln des Zuluft-Lüfterrads 16 ist in der Vorderseite des Gehäuses 3 sowie in der linken Seite des Zuluft-Lüftergehäuses 9 eine Zuluftauslaßöffnung 11 vorgesehen, deren Höhe der Breite der Lüfterschaufeln entspricht.

Das Zuluft-Lüftergehäuse setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

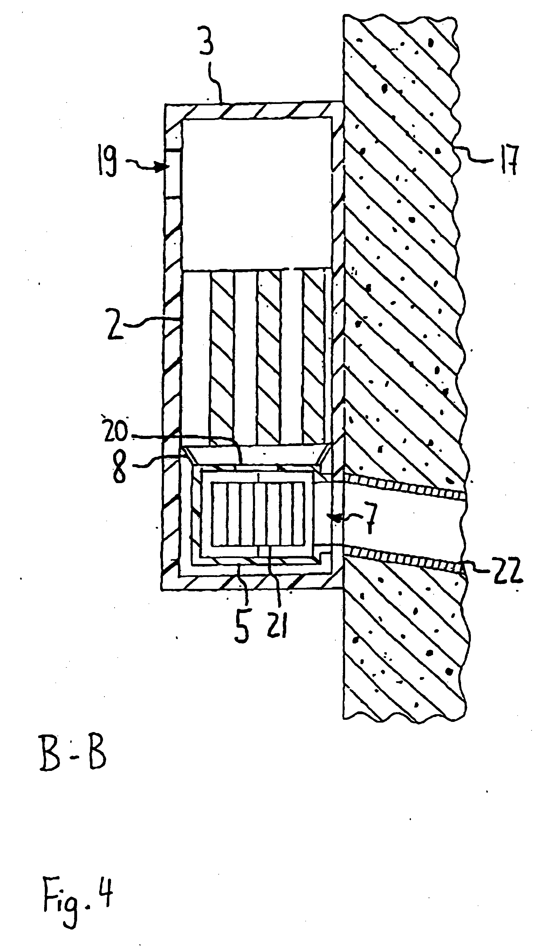

Figur 4 zeigt eine schematische Darstellung eines Querschnitts entlang der Schnittlinie B-B des an der Außenwand 17 befestigten Luftaustauschsystems 1 gemäß dem Ausführungsbeispiel. In Figur 4 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich. Im Ablufteinlaßbereich ist auf der Vorderseite des Gehäuses 3 eine Ablufteinlaßöffnung 19 vorgesehen. Im Plattenwärmetauscherbereich ist der Plattenwärmetauscher 2 angeordnet, der vier parallele, vertikal verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. Der Fortluftausläßbereich umfaßt einen hinsichtlich der Bauart, hinsichtlich der Größe und hinsichtlich der Ausrichtung mit dem in Figur 3 gezeigten Zuluftlüfterrad 16 identisches Fortlüftlüfterrad 21. Das Fortluft-Lüfterrad 21 ist zentriert innerhalb des Fortluft-Lüftergehäuses 5 angeordnet. Horizontal auf gleicher Höhe mit dem Fortluft-Lüfterrad 21 weist das Fortluft-Lüftergehäuse 5 auf der rechten Seite sowie das Gehäuse 3 auf seiner Rückseite jeweils eine Fortluftauslaßöffnung 7 auf. An dieser Fortluftauslaßöffnung 7 setzt ein Fortluftauslaßrohr 22 an, das leicht nach rechts unten geneigt verläuft. Mittig auf der Oberseite des Fortluft-Lüftergehäuses 5 ist eine Fortluftzuführungsöffnung 20 vorgesehen, deren Breite ungefähr einem Drittel der Gesamtbreite des Fortluft-Lüftergehäuses 5 entspricht. Zwischen dem linken und dem rechten Ende der Unterseite des Plattenwärmetauschers 2 und der linken und rechten Seite der Oberseite des Fortluft-Lüftergehäuses 5 ist der Trichter 8 angeordnet.

Im folgenden wird die Funktionsweise der Luftaustauschvorrichtung 1 näher erläutert.

Wie in Figur 2 beschrieben, besteht zwischen dem Abluftstrom 12 und dem Außenluftstrom 14 ein Temperaturgefälle, das im Betrieb der Luftaustauschvorrichtung 1 durch den Plattenwärmetauscher 2 reduziert wird. Dabei wird der Abluftstrom 12 abgekühlt und der Außenluftstrom 14 erwärmt. Der Abluftstrom 12 sondert bei der Abkühlung Kondenswasser ab, das an der Abkühlseite des Plattenwärmetauschers 2, insbesondere an dem Kaltluftauslaß 103 auftritt.

Wie in Figur 1 sowie in Figur 3 dargestellt, wird durch den Zuluftansaugradiallüfter 10 bzw. durch das Zuluftlüfterrad 16 kalte Außenluft angesaugt. Dieser Außenluftstrom 14 tritt durch das in Figur 3 gezeigte Außenluftzufuhrrohr 18 in die Luftaustauschvorrichtung 1 ein. Dann strömt der Außenluftstrom 14 durch die Luftführungen des Plattenwärmetauschers 2 und wird dabei erwärmt. Anschließend fließt die nun als Zuluftstrom 15 bezeichnete, erwärmte Luft durch die Zuluftauslaßöffnung 11 auf der Gehäusevorderseite 26 in das Gebäudeinnere.

Wie in Figur 1 und in Figur 4 ersichtlich, saugt der Fortluftradiallüfter 6 bzw. das Fortluft-Lüfterrad 21 durch die Bewegung der Lüfterschaufeln 23 gleichzeitig dazu warme Abluft aus dem Gebäudeinneren an. Dieser Abluftstrom 12 fließt in die Luftführungen des Plattenwärmetauschers 2. Beim Durchströmen des Plattenwärmetauschers 2 wird der Abluftstrom 12 gekühlt. Der Abluftstrom 12 gelangt danach durch den Trichter 8 und durch die Fortluftzuführungsöffnung 20 in das Fortluft-Lüftergehäuse 5. Von dort aus wird die nun als Fortluftstrom 13 bezeichnete Luft - in Folge der Bewegung des Fortluft-Lüfterrads 21 sowie in Folge der Druckdifferenz, die zwischen dem Innenraum des Fortluft-Lüfterrads 21 und dem außerhalb der Fortluftauslaßöffnung 7 gelegenen Bereich herrscht - durch die Fortluftauslaßöffnung 7 aus der Luftaustauschvorrichtung 1 sowie durch das Fortluftauslaßrohr 22 auf eine Außenseite des Gebäudes befördert.

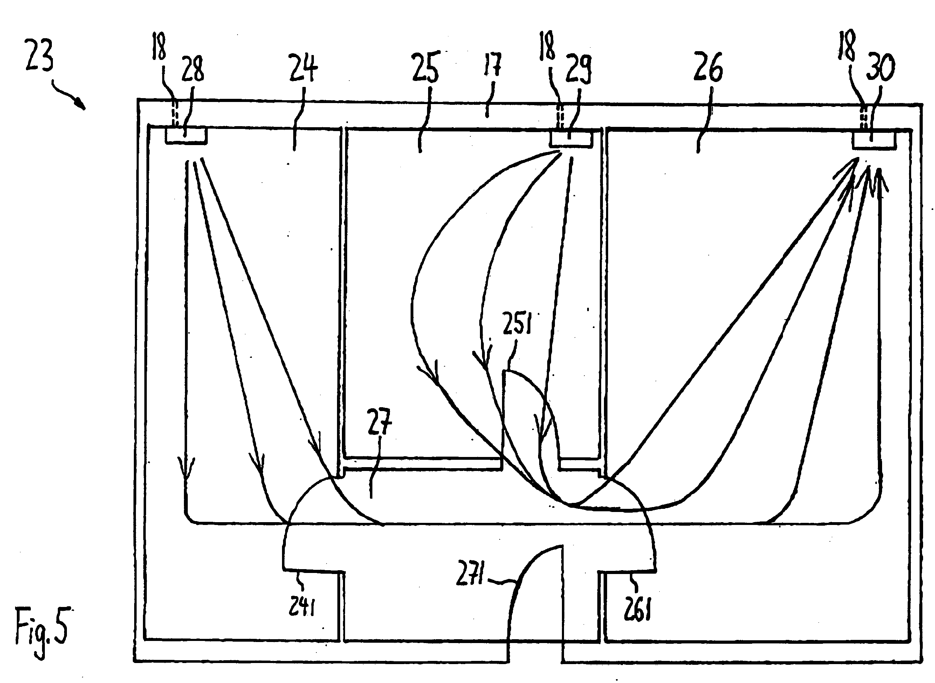

Figur 5 zeigt einen schematischen Grundriß eines Gebäudeabschnitts 23 mit drei an der Innenseite der Außenwand 17 dieses Gebäudeabschnitts 23 befestigten Luftaustauschvorrichtungen 28, 29 und 30 gemäß einem ersten Ausführungsbeispiel.

Der Gebäudeabschnitt 23 weist eine rechteckige längliche Form auf und gliedert sich in einen ersten Raum 24, in einen zwei-ten Raum 25, in einen dritten Raum 26 sowie in einen vierten Raum 27. Der erste Raum 24 weist eine rechteckige Form auf, befindet sich in dem linken Viertel des Gebäudeabschnitts 23 und erstreckt sich über die gesamte Tiefe des Gebäudeabschnitts 23. Die linke, die vordere und die hintere Begrenzung des ersten Raums 24 werden von einem Abschnitt der Außenwand 17 gebildet. Auf der rechten Seite wird der erste Raum 24 von einer gerade verlaufenden Zwischenwand begrenzt, in deren vorderem Bereich eine erste Tür 241 angeordnet ist, die den ersten Raum 24 mit dem vierten Raum 27 verbindet. Der vierte Raum 27 weist eine Breite von einem guten Drittel der Gesamtbreite des Gebäudeabschnitts 23 und eine Tiefe von ungefähr einem Drittel der Gesamttiefe des Gebäudeabschnitts 23 auf. Ein Abschnitt der Außenwand 17 bildet das vordere Ende des vierten Raums 27. Hinter dem vierten Raum 27 befindet sich der zweite Raum 25, der von dem vierten Raum 27 durch eine gerade verlaufende Zwischenwand getrennt ist. In dem rechten Bereich dieser Zwischenwand ist eine zweite Tür 251 angeordnet, die den vierten Raum 27 mit dem zweiten Raum 25 verbindet. Rechterhalb des zweiten Raums 25 und rechterhalb des vierten Raums 27 befindet sich der dritte Raum 26. Dieser erstreckt sich über die gesamte Tiefe und über ein gutes Drittel der Gesamtbreite des Gebäudeabschnitts 23. Der dritte Raum 26 ist durch eine gerade verlaufende Zwischenwand von dem zweiten Raum 25 und von dem vierten Raum 27 getrennt, wobei in dem vorderen

Bereich dieser Zwischenwand eine dritte Tür 261 zur Verbindung des dritten Raums 26 mit dem vierten Raum 27 angeordnet ist. An der Vorderseite des Gebäudeabschnitts 23 ist eine Eingangstür 271 vorgesehen, die in den vierten Raum 27 führt.

Eine erste Luftaustauschvorrichtung 28 befindet sich in einem linken Bereich der hinteren Wand des ersten Raums 24. Eine zweite Luftaustauschvorrichtung 29 ist in einem rechten Bereich der hinteren Wand des zweiten Raums 25 vorgesehen. Eine dritte Luftaustauschvorrichtung 30 ist in einem rechten Bereich der hinteren Wand des dritten Raums 26 angeordnet. Die Luftaustauschvorrichtungen 28 bis 30 sind jeweils mit ihrer Rückseite des Gehäuses 3 an die Innenseite der Außenwand 17 montiert. Dabei verlaufen hinter den Luftaustauschvorrichtungen 28 bis 30 jeweils ein Außenluftzufuhrrohr 18 sowie ein Fortluftauslaßrohr 22. Die Außenluftzufuhrrohre 18 sind in Figur 5 jeweils gestrichelt dargestellt. Die Luftaustauschvorrichtungen 28 bis 30 sind so an der Außenwand 17 befestigt, daß ihre Außenlufteinlaßöffnung 4 jeweils auf dem Außenluftzufuhrrohr 18 und ihre Fortluftauslaßöffnung 7 jeweils auf dem Fortluftauslaßrohr 22 anliegen.

Nachfolgend wird mit Bezug auf Figur 5 zunächst eine erste Variante des ersten Ausführungsbeispiels beschrieben, bei dem die zweite Tür 251 und die Eingangstür 271 geschlossen und die erste Tür 241 sowie die dritte Tür 261 geöffnet sind.

Die erste Luftaustauschvorrichtung 28, die zweite Luftaustauschvorrichtung 29 sowie die dritte Luftaustauschvorrichtung 30 fördern jeweils einen Zuluftstrom 15 in das Innere des Gebäudeabschnitts 23 und fördern gleichzeitig einen Fortluftstrom 13 aus dem Inneren des Gebäudeabschnitts 23 auf die hinter dem Gebäudeabschnitt 23 gelegene Außenseite des Gebäudeabschnitts 23.

Bei der zweiten Luftaustauschvorrichtung 29 drehen sich das Zuluft-Lüfterrad 16 und das Fortluft-Lüfterrad 21 mit derselben Drehfrequenz, so daß das Volumen des Zuluftstroms 15 mit dem Volumen des Fortluftstroms 13 übereinstimmt. Mit diesem Betriebsmodus der zweiten Luftaustauschvorrichtung 29 wird eine ausreichende Versorgung des zweiten Raums 25 mit frischer erwärmter Außenluft sichergestellt.

Das Zuluft-Lüfterrad 16 der ersten Luftaustauschvorrichtung 28 wird mit einer um 50% höheren Drehfrequenz betrieben als das Fortluft-Lüfterrad 21 der ersten Luftaustauschvorrichtung 28. Der durch die erste Luftaustauschvorrichtung 28 in den ersten Raum 24 geförderte Zuluftstrom 15 ist demnach um ungefähr 50% größer ausgebildet als der aus dem ersten Raum 24 auf die Außenseite des Gebäudeabschnitts 23 geförderte Fortluftstrom 13. Durch die erste Luftaustauschvorrichtung 28 wird demnach mehr frische Zuluft in den ersten Raum 24 befördert, als verbrauchte Fortluft aus ihm hinausbefördert wird.

Das Fortluft-Lüfterrad 21 der dritten Luftaustauschvorrichtung 30 wird mit einer um 50% höheren Drehfrequenz betrieben als das Zuluft-Lüfterrad 16 der dritten Luftaustauschvorrichtung 30. Dementsprechend ist das Volumen des aus dem dritten Raum 26 herausbeförderten Fortluftstroms 13 um ungefähr 50% größer ausgebildet als das Volumen des von der Außenseite des Gebäudeabschnitts 23 in den dritten Raum 26 hineinbeförderten Zuluftstroms 15. Durch die dritte Luftaustauschvorrichtung 28 wird somit weniger frische Zuluft in den dritten Raum 26 befördert, als verbrauchte Fortluft aus ihm hinausbefördert wird.

In dem Gebäudeabschnitt 23 entwickelt sich eine in Figur 5 mittels Pfeilen dargestellte Luftbewegung zwischen der ersten Luftaustauschvorrichtung 28 und der dritten Luftaustauschvorrichtung 30. Dabei sind die Pfeile, die in Figur 5 zwischen dem zweiten Raum 25 und dem dritten Raum 26 verlaufen, nicht zu beachten. Es entsteht ein Luftstrom, der sich, ausgehend von der ersten Luftaustauschvorrichtung 28, durch den ersten Raum 24, durch den vierten Raum 27 und durch den dritten Raum 26 bis zu der dritten Luftaustauschvorrichtung 30 erstreckt. Dadurch ist gewährleistet, daß der erste Raum 24 und der dritte Raum 26 sowie der zwischen diesen beiden Räumen angeordnete vierte Raum 27 mit frischer erwärmter Zuluft versorgt wird.

Im folgenden wird mit Bezug auf Figur 5 eine zweite Variante des zweiten Ausführungsbeispiels erläutert, bei dem die erste Tür 241, die zweite Tür 251 und die dritte Tür 261 geöffnet und die Eingangstür 271 geschlossen sind.

Dabei arbeiten sowohl bei der ersten Luftaustauschvorrichtung 28 sowie bei der zweiten Luftaustauschvorrichtung 29 die Zuluft-Lüfterräder 16 jeweils mit einer Drehfrequenz, die um ungefähr 25% höher ausgebildet ist als die Drehfrequenz der Fortluft-Lüfterräder 21. Dementsprechend wird von den Luftaustauschvorrichtungen 28 und 29 jeweils ungefähr 25% mehr Zuluft in das Innere des Gebäudeabschnitts 23 befördert, als Abluft hinausbefördert wird. Das Volumenverhältnis des Zuluftstroms 15 zu dem Fortluftstrom 13 beträgt bei den Luftaustauschvorrichtungen 28 und 29 jeweils 55:45.

Das Fortluft-Lüfterrad 21 der dritten Luftaustauschvorrichtung 30 dreht sich mit einer Drehfrequenz, die um ca. 50% größer ist, als die Drehfrequenz des Zuluft-Lüfterrads 16 der dritten Luftaustauschvorrichtung 30. Der von der dritten Luftaustauschvorrichtung 30 in den dritten Raum 26 geförderte Zuluftstrom 15 ist daher um ca. 50% geringer ausgebildet als der gleichzeitig aus dem dritten Raum 26 auf die Außenseite des Gebäudeabschnitts 23 beförderte Fortluftstrom 13. Das Verhältnis des Zuluftstroms 15 zu dem Fortluftstrom 13 beträgt ungefähr 40:60.

Durch diesen Betriebsmodus der Luftaustauschvorrichtungen 28-30 wird eine Versorgung der Räume 24 bis 27 mit frischer unverbrauchter Außenluft gewährleistet. Dabei wird auch der vierte Raum 27 durchlüftet, in dem sich nicht unmittelbar eine Luftaustauschvorrichtung befindet. Die Luftbewegung verläuft von der ersten Luftaustauschvorrichtung 28 durch den ersten Raum 24, durch den vierten Raum 27 und durch den dritten Raum 26 zu der dritten Luftaustauschvorrichtung 30 sowie von der zweiten Luftaustauschvorrichtung 29 über den zweiten Raum 25, über den vierten Raum 27 und über den dritten Raum 26 zu der dritten Luftaustauschvorrichtung 30. Diese Luftbewegungen sind in Figur 5 mittels Pfeilen dargestellt.

Diese Luftbewegungen können sehr einfach modifiziert werden, indem die Drehfrequenzen der Zuluft-Lüfterräder 16 sowie der Fortluft-Lüfterräder 21 der Luftaustauschvorrichtungen 28-30 verändert werden.

In weiteren, hier nicht gezeigten Varianten des ersten Ausführungsbeispiels können auch größere Gebäudeabschnitte 23 mit den erfindungsgemäßen Luftaustauschvorrichtungen belüftet werden. Dabei kann auch eine weit größere Zahl von Luftaustauschvorrichtungen zum Einsatz kommen, wobei ein Luftaustauschsystem mit einer geraden Anzahl von Luftaustauschvorrichtungen besonders effektiv arbeitet.

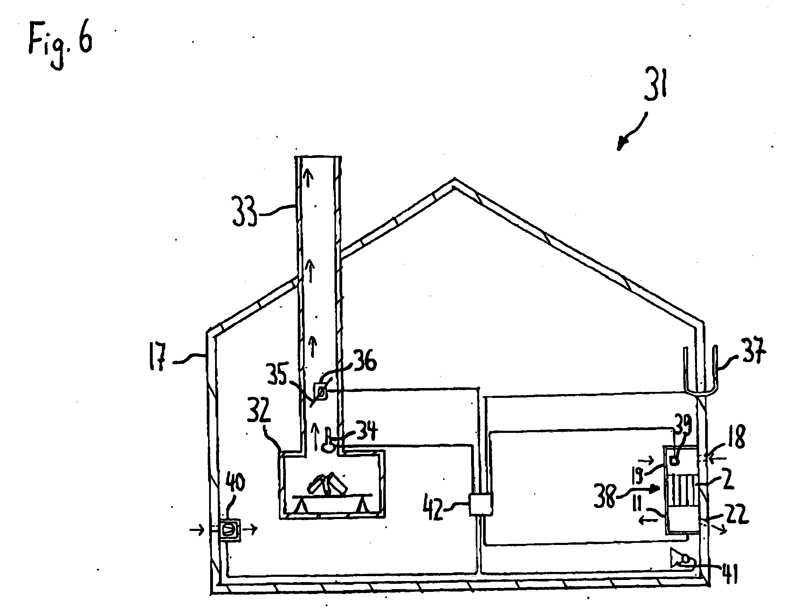

Figur 6 zeigt eine schematische Schnittdarstellung eines Wohnhauses 31 mit einem Kamin 32 und mit einem Schornstein 33 sowie eine schematische Darstellung eines in diesem Wohnhaus 31 befindlichen Luftaustauschsystems gemäß einem zweiten Ausführungsbeispiel.

Der Kamin 32 sowie der von diesem Kamin 32 senkrecht nach oben führende Schornstein 33 sind im linken Bereich des Gebäudeinneren des Wohnhauses 31 angeordnet. Durch den Kamin 32 können die bei dem Verbrennungsprozeß in dem Kamin 32 entstandenen Gase auf eine Außenseite des Wohnhauses 31 entweichen.

Das in Figur 6 dargestellte Luftaustauschsystem gliedert sich in eine vierte Luftaustauschvorrichtung 38, in einen Temperatursensor 34, in eine Belüftungsklappe 35 mit einem Belüftungsklappenschalter 36, in einen Differenzdrucksensor 37, in einen Rauchmelder 39, in ein Notlüftungsgerät 40, in einen Alarmgeber 41 sowie in eine Steuerungseinheit 42.

Der Temperatursensor 34 ist in einem unteren Bereich des Schornsteins 33 angeordnet und mißt die Temperatur der entweichenden Gase. Die über einen Belüftungsklappenschalter 36 steuerbare Belüftungsklappe 35 ist in Figur 6 etwas oberhalb des Temperatursensors 34 angeordnet. Diese Belüftungsklappe 35 ist drehbar ausgebildet und schließt in waagrechtem Zustand den Innenquerschnitt des Schornsteins 33 dicht ab, so daß keine Gase mehr nach oben entweichen können. In der Darstellung in Figur 6 befindet sich die Belüftungsklappe 35 in einem leicht schrägen und somit geöffneten Zustand.

Die in ihrem Aufbau der Luftaustauschvorrichtung 1 entsprechende vierte Luftaustauschvorrichtung 38 ist an die Innenseite der rechten Außenwand 17 des Wohnhauses 31 montiert. Der Rauchmelder 39 ist im Inneren der vierten Luftaustauschvorrichtung 38 unmittelbar an der Ablufteinlaßöffnung 19 angeordnet. Etwas oberhalb der vierten Luftaustauschvorrichtung 38 befindet sich der Differenzdrucksensor 37, der zur Messung der Druckdifferenz zwischen der Innenseite und der Außenseite des Wohnhauses 31 vorgesehen ist. Dieser Differenzdrucksensor 37 ist in Figur 6 als ein U-förmiges Rohr mit einer darin enthaltenen Flüssigkeit dargestellt. Die linke Hälfte dieses U-förmigen Rohres befindet sich innerhalb des Wohnhauses 31, die rechte Hälfte außerhalb des Wohnhauses 31. Das untere leicht gebogene Verbindungsstück der beiden Bereiche verläuft durch die Außenwand 17. Die beiden oberen Rohrenden des Differenzdrucksensors 37 sind offen, so daß die in dem Differenzdrucksensor 37 eingefüllte Flüssigkeit bei unterschiedlichen Druckverhältnissen zwischen der Innen- und der Außenseite des Wohnhauses 31 jeweils auf der Innen- und auf der Außenseite des Differenzdrucksensors 37 unterschiedliche Höhen der Wassersäule aufweist. In dem in Figur 6 gezeigten zweiten Ausführungsbeispiel ist die Wassersäule im Inneren des Wohnhauses 31 höher ausgebildet als auf der Außenseite des Wohnhauses 31. Dementsprechend herrscht im Gebäudeinneren des Wohnhauses 31 ein relativer Unterdruck zu der Außenseite des Wohnhauses 31. In der Praxis werden die Höhen dieser Wassersäule entweder elektronisch durch Sensoren oder optisch durch Kameras erfaßt. Vor Inbetriebnahme der vorliegenden vierten Luftaustauschvorrichtung 38 ist es notwendig, den Differenzdrucksensor 37 zu eichen bzw. zu kalibrieren, da auf der Innen- und auf der Außenseite des Wohnhauses 31 häufig unterschiedliche Temperaturen anliegen, die sich gemäß der thermischen Zustandsgleichung für ideale Gase: (p*V/T) = const. auch auf den jeweils im Gebäudeinneren bzw. auf der Außenseite des Gebäudes herrschenden Druck auswirken.

Etwas unterhalb der vierten Luftaustauschvorrichtung 38 befindet sich der akustische Alarmgeber 41, der zur Ausgabe von akustischen Signalen bzw. Signalfolgen fähig ist. Das Notlüftungsgerät 40 ist an der linken Außenwand 17 des Wohnhauses 31 angeordnet. Innerhalb dieses Notlüftungsgeräts 40 ist ein Notluft-Lüfter vorgesehen, der Außenluft durch ein in der Außenwand 17 vorgesehenes Notluftzufuhrrohr ansaugt und durch ein in dem Notlüftungsgerät 40 angeordnetes Notluftzufuhrloch in das Gebäudeinnere des Wohnhauses 31 befördert.

Die in einem mittleren Bereich des Wohnhauses 31 angeordnete Steuerungseinheit 42 weist auf ihrer Oberseite vier Eingänge und auf ihrer Unterseite drei Ausgänge auf. Die vier Eingänge der Steuerungseinheit 42 sind jeweils mittels Draht- bzw. Kabelverbindungen mit dem Temperatursensor 34, mit dem Belüftungsklappenschalter 36, mit dem Differenzdrucksensor 37 sowie mit dem Rauchmelder 39 verbunden. Die Ausgänge der Steuerungseinheit 42 sind ebenfalls mittels Draht- bzw. Kabelverbindungen mit der vierten Luftaustauschvorrichtung 38, mit dem Notlüftungsgerät 40 sowie mit dem Alarmgeber 41 verbunden. Anstelle der Kabel- bzw. Drahtverbindungen der Ein- und Ausgänge der Steuerungseinheit 42 können auch Funkverbindungen in Kombination mit Sendern und Empfängern vorgesehen sein.

Im folgenden wird die Funktionsweise der vierten Luftaustauschvorrichtung 38 in Verbindung mit der Steuerungseinheit 42, mit dem Temperatursensor 34, mit dem Belüftungsklappenschalter 36, mit dem Differenzdrucksensor 37, mit dem Rauchmelder 39, mit dem Notlüftungsgerät 40 und mit dem Alarmgeber 41 näher erläutert.

In einer ersten Variante des zweiten Ausführungsbeispiels weist die Steuerungseinheit 42 nur einen Eingang sowie nur einen Ausgang auf. Der Eingang der Steuerungseinheit 42 ist mit dem Belüftungsklappenschalter 36 der Belüftungsklappe 35 verbunden, der Ausgang der Steuerungseinheit 42 steht mit der vierten Luftaustauschvorrichtung 38 in Verbindung. Zu Beginn der ersten Variante des zweiten Ausführungsbeispiels befinden sich der Belüftungsklappenschalter 36 in einem geschlossenen Zustand und die vierte Luftaustauschvorrichtung 38 in einem Pausezustand. Nun wird von einem Benutzer der Verbrennungsprozeß in dem Kamin 32 gestartet und der Belüftungsklappenschalter 36 betätigt, wodurch die Belüftungsklappe 35 geöffnet wird, so daß die bei dem Verbrennungsprozeß entstehenden Gase nach oben entweichen können. Die Steuerungseinheit 42 erfaßt an ihrem Eingang die Zustandsänderung des Belüftungsklappenschalters 36 und gibt über ihren Ausgang ein Signal an die vierte Luftaustauschvorrichtung 38 ab. Die vierte Luftaustauschvorrichtung 38 nimmt daraufhin ihren Betrieb auf, wobei die Drehfrequenz des Zuluft-Lüfters 16 höher ausgebildet ist als die Drehfrequenz des Fortluft-Lüfters 21, um für eine Luftzirkulation zu sorgen und um genügend Sauerstoff für den Verbrennungsprozeß zur Verfügung zu stellen. Bei Beendigung des Verbrennungsprozesses wird die Belüftungsklappe 35 durch Betätigung des Belüftungsklappenschalters 36 in einen geschlosenen Zustand versetzt. Dies wird durch die Steuerungseinheit 42 erfaßt, die daraufhin die vierte Luftaustauschvorrichtung 38 abschaltet.

In einer zweiten Variante dieses Ausführungsbeispiels ist zusätzlich ein zweiter Eingang der Steuerungseinheit 42 mit dem Temperatursensor 34 verbunden. Dieser Temperatursensor 34 gibt Signale an die Steuerungseinheit 42 weiter, falls die von ihm gemessene Temperatur unter einen vorgegebenen unteren Grenzwert fällt oder einen ebenfalls vorgegebenen oberen Grenzwert übersteigt. Falls die von dem Temperatursensor 34 gemessene Temperatur unter dem unteren Grenzwert liegt, so wird von der Steuerungseinheit 42 ein Signal an die vierte Luftaustauschvorrichtung 38 abgegeben, das diese dazu veranlaßt, die Drehfrequenz des Zuluft-Lüfters 16 zu erhöhen und/oder die Drehfrequenz des Fortluft-Lüfters 21 zu vermindern. Dadurch wird die Menge des dem Verbrennungsprozeß zugeleiteten Sauerstoffs erhöht, was eine Erwärmung bewirkt. Steigt die von dem Temperatursensor 34 erfaßte Temperatur über den oberen Grenzwert, so wird von der Steuerungseinheit 42 ein Signal an die vierten Luftaustauschvorrichtung 38 abgegeben, das eine Verminderung der Drehfrequenz des Zuluft-Lüfters 16 und/oder eine Erhöhung der Drehfrequenz des Fortluft-Lüfters 21 bewirkt. Dadurch wird die dem Verbrennungsprozeß zukommende Sauerstoffmenge reduziert, was eine Verminderung der Temperatur nach sich zieht. Es ist auch denkbar, daß beim Überschreiten des oberen Grenzwerts durch den von dem Temperatursensor 34 gemessenen Temperaturwert die vierte Luftaustauschvorrichtung 38 komplett ausgeschaltet wird.

In einer dritten Variante des zweiten Ausführungsbeispiels ist zusätzlich der dritte Eingang der Steuerungseinheit 42 mit dem Differenzdrucksensor 37 verbunden. Zu Beginn der dritten Variante des zweiten Ausführungsbeispiels ist die Druckdifferenz zwischen der Innenseite und der Außenseite des Wohnhauses 31 gleich Null. Dann wird in dem Kamin 32 der Verbrennungsprozeß gestartet, wodurch die bei der Verbrennung entstehenden Gase nach oben entweichen. Der Belüftungsklappenschalter 36 wird betätigt, wodurch die Belüftungsklappe 35 geöffnet wird. In dem Gebäudeinneren des Wohnhauses 31 entsteht nun nach und nach ein Unterdruck. Nach einer gewissen Zeit detektiert der Differenzdrucksensor 37 eine Druckdifferenz zwischen dem auf der Außenseite und auf der Innenseite herrschenden Druck von 5 Pa. Dies wird von der Steuerungseinheit 42 erfaßt, woraufhin die vierte Luftaustauschvorrichtung 38 in Betrieb genommen wird, wobei der Zuluft-Lüfter 16 mit einer deutlich höheren Drehfrequenz arbeitet als der Fortluft-Lüfter 21. Dadurch wird eine Verminderung der detektierten Druckdifferenz erreicht.

In einer vierten Variante des zweiten Ausführungsbeispiels ist zusätzlich der Rauchmelder 39 mit dem vierten Eingang der Steuerungseinheit 42 verbunden. Wird durch diesen Rauchmelder 39 festgestellt, daß im Abluftstrom 12 vorhandene Schadgase, wie CO, CO₂ oder Cl eine vorgebbare Maximalkonzentration überschreiten, so werden die Drehfrequenzen des Zuluft-Lüfters 16 und des Fortluft-Lüfters 21 weiter erhöht.

In einer fünften Variante des vorliegenden Ausführungsbeispiels ist zusätzlich der Alarmgeber 41 mit dem zweiten Ausgang der Steuerungseinheit 42 verbunden. Dieser Alarmgeber 41 kann dann von der Steuerungseinheit 42 betätigt werden, wenn der Temperatursensor 34 eine überhöhte Temperatur feststellt und/oder wenn der Rauchmelder 39 eine erhöhte Konzentration von Schadgasen im Abluftstrom feststellt und/oder wenn der Differenzdrucksensor 37 entweder ein Überschreiten des Grenzwertes von 10 Pa durch den Differenzdruck Δp registriert oder wenn ein Differenzdruck von mehr als 5 Pa langer als ein durch einen Benutzer vorgebbarer Zeitabschnitt anliegt.

In einer sechsten Variante dieses Ausführungsbeispiels ist noch ein Notlüftungsgerät 40 mit dem dritten Ausgang der Steuerungseinheit 42 verbunden. Dieses Notlüftungsgerät 40 wird dann zugeschaltet, wenn durch den Rauchmelder 39 eine bestimmte Schadgaskonzentration im Gebäudeinneren des Wohnhauses 31 festgestellt wird und/oder wenn der Differenzdruck Δp größer als ein Grenzwert von 10 Pa ausgebildet ist oder wenn der Differenzdruck länger als eine vorgegebene Zeitspanne über dem Grenzwert von 5 Pa liegt.

### Bezugszeichenliste

- 1: Luftaustauschvorrichtung
- 2: Plattenwärmetauscher
- 3: Gehäuse
- 4: Außenlufteinlaßöffnung
- 5: Fortluft-Lüftergehäuse
- 6: Fortluftradiallüfter
- 7: Fortluftauslaßöffnung
- 8: Trichter
- 9: Zuluft-Lüftergehäuse
- 10: Zuluftansaugradiallüfter
- 11: Zuluftauslaßöffnung
- 12: Abluftstrom
- 13: Fortluftstrom
- 14: Außenluftstrom
- 15: Zuluftstrom
- 102: Warmlufteinlaß
- 103: Kaltluftauslaß
- 104: Kaltlufteinlaß
- 105: Warmluftauslaß
- 16: Zuluft-Lüfterrad
- 17: Außenwand
- 18: Außenluftzufuhrrohr
- 19: Ablufteinlaßöffnung
- 20: Fortluftzuführungsöffnung
- 21: Fortluft-Lüfterrad
- 22: Fortluftauslaßrohr
- 23: Gebäudeabschnitt
- 24: erster Raum
- 241: erste Tür
- 25: zweiter Raum
- 251: zweite Tür
- 26: dritter Raum
- 261: dritte Tür
- 27: vierter Raum
- 271: Eingangstür
- 28: erste Luftaustauschvorrichtung
- 29: zweite Luftaustauschvorrichtung
- 30: dritte Luftaustauschvorrichtung
- 31: Wohnhaus
- 32: Kamin
- 33: Schornstein
- 34: Temperatursensor
- 35: Belüftungsklappe
- 36: Belüftungsklappenschalter
- 37: Differenzdrucksensor
- 38: vierte Luftaustauschvorrichtung
- 39: Rauchmelder
- 40: Notlüftungsgerät
- 41: Alarmgeber
- 42: Steuerungseinheit

## Patentansprüche

1. Luftaustauschsystem für die Belüftung wenigstens eines Raumes eines Gebäudes (24-27) mit den folgenden Merkmalen:
eine erste Luftaustauschvorrichtung (1,28) für die Belüftung wenigstens eines Raumes (24-27) eines Gebäudes (3), die - ein erstes Gehäuse (3) mit einem in dem ersten Gehäuse (3) angeordneten elektrischen Zuluft-Lüfter (16) zur Förderung eines Zuluftstroms (15) von einer Außenseite des Gebäudes in einen Raum (24) des Gebäudes, sowie
- einen in dem Gehäuse (3) angeordneten Wärmetauscher (2), durch den der Zuluftstrom (15) und durch den ein Fortluftstrom (13) fließt, und wobei wenigstens eine weitere Luftaustauschvorrichtung (1,30) die folgenden Merkmale aufweist:
- ein weiteres Gehäuse (3) mit einem in dem weiteren Gehäuse (3) angeordneten elektrischen Fortluft-Lüfter (21) zur Förderung eines Fortluftstroms (13) aus dem Raum (24) des Gebäudes auf die Außenseite des Gebäudes, sowie
- einen in dem weiteren Gehäuse (3) angeordneten weiteren Wärmetauscher (2), durch den ein Fortluftstrom (13) und durch den ein Zuluftstrom (15) fließt,
und wobei eine Steuereinheit vorgesehen ist, die derart mit der ersten und der weiteren Luftaustauschvorrichtung (1) verbunden ist, dass die Drehfrequenz der Lüfterblätter des Zuluft-Lüfters und die Drehfrequenz der Lüfterblätter des Fortluft-Lüfters so veränderbar sind, dass bei der ersten Luftaustauschvorrichtung (1,28) der Zuluftstrom größer als der Fortluftstrom ausgebildet ist und bei der weiteren Luftaustauschvorrichtung (1,30) der Fortluftstrom größer als der Zuluftstrom ausgebildet ist, wobei eine Luftbewegung von der ersten Luftaustauschvorrichtung (1) zu der weiteren Luftaustauschvorrichtung (1) erzeugt wird, und diese Luftbewegung durch eine Veränderung der Drehfrequenzen des Zuluft-Lüfters (16) und des Fortluft-Lüfters (21) modifizierbar ist.

2. Luftaustauschsystem nach Anspruch 1, **dadurch gekennzeichnet, dass**
wenigstens eine Außenwand (17) des Gebäudes (23) vorgesehen ist, wobei die Gehäuserückseiten der Luftaustauschvorrichtungen (1) an der Außenwand (17) angebracht sind und dass an bzw. in der Außenwand (17) wenigstens eine Rohrverbindung (18, 22) zu der Außenseite des Gebäudes (23) vorgesehen ist.

3. Luftaustauschsystem nach Anspruch 2,
**dadurch gekennzeichnet, dass**
wenigstens eine Luftaustauschvorrichtung (1) an einer ersten Außenwand und wenigstens eine weitere Luftaustauschvorrichtung (1) an einer insbesondere gegenüber der ersten Außenwand liegenden zweiten Außenwand angebracht sind.

4. Luftaustauschsystem nach Anspruch 3,
**dadurch gekennzeichnet, dass** sich die erste Außenwand (17) und die zweite Außenwand (17) in unterschiedlichen Räumen (24-26) des Gebäudes (23) befinden.

5. Luftaustauschsystem nach Anspruch 4,
**dadurch gekennzeichnet, dass**
zwischen der ersten Außenwand (17) und der zweiten Außenwand (17) wenigstens ein Durchgang und/oder wenigstens ein weiterer Raum (27) angeordnet ist.

## Claims

1. Air-exchange system for the ventilation of at least one room of a building (24-27) with the following features:
a first air exchange device (1, 28) for the ventilation of at least one room (24- 27) of a building (3), which comprises
- a first casing (3) with an electric supply air fan (16) that is arranged within the first casing (3) for conveying a supply air current (15) from an outer side of the building into a room (24) of the building, and
- a heat exchanger (2) that is arranged within the casing (3), through which the supply air current (15) and through which an exhaust air current (13) flows,
and wherein at least one further air exchange device (1, 30) comprises the following features:
- a further casing (3) with an electric exhaust air fan arranged in the further casing (3) for conveying an exhaust air current (13) out of the room (24) of the building to the outer side of the building, and
- a further heat exchanger (2) that is arranged within the further casing (3), through which an exhaust air current (13) flows and through which a supply air current (15) flows,
and wherein a control unit has been provided, which is connected to the first and to the further air exchange device (1) in such a way that the rotational frequency of the fan blades of the supply air fan and the rotational frequency of the exhaust air fan are adjustable such that the supply air current at the first air exchange device (1, 28) is designed to be greater than the exhaust air current, and the exhaust air current at the further air exchange device (1, 30) is designed to be greater than the supply air current,
wherein an air movement is generated from the first air exchange device (1) to the further air exchange device (1), and that this air movement is modifiable by changing the rotational frequencies of the supply air fan (16) and the exhaust air fan (21).

2. Air-exchange system according to claim 1, **characterized in that** at least an external wall (17) of the building is provided, wherein the rear casing surfaces of the air exchange devices (1) are attached to the outer wall (17) and **in that** a tube joint (18, 22) is provided at or in the outer wall (17) of the building (23).

3. Air-exchange system according to claim 2, **characterized in that**
at least one air exchange device (1) is attached to a first outer wall and at least one further air exchange device (1) is provided at a second outer wall that is in particular situated opposite to the first outer wall.

4. Air-exchange system according to claim 3, **characterized in that**
the first outer wall (17) and the second outer wall (17) are located in different rooms (24-26) of the building (23).

5. Air-exchange system according to claim 4, **characterized in that**
at least a passage and/or a further room (27) is located between the first outer wall (17) and the second outer wall (17).

## Revendications

1. Système de renouvellement d'air pour aérer au moins une pièce d'un bâtiment (24-27) avec des caractéristiques suivantes:
un premier dispositif de renouvellement d'air (1, 28) pour l'aération d'au moins une pièce (24-27) d'un bâtiment (3), qui comprend:
- un boîtier premier (3) avec un ventilateur électrique d'air amené (16) qui est disposé dans le boîtier premier (3) pour transporter un courant d'air amené (15) d'une face extérieur du bâtiment dans une pièce (24) du bâtiment, ainsi que
- un échangeur thermique (2) qui est disposé dans le boîtier (3), à travers de qui coule un courant d'air d'échappement (13) et le courant d'air amené (15) et dans lequel au moins un autre dispositif de renouvellement d'air (1, 30) comprend les caractéristiques suivantes:
- un autre boîtier (3) avec un ventilateur électrique d'air d'échappement qui est disposé dans l'autre boîtier (3) pour transporter un courant d'air d'échappement (13) de la pièce (24) du bâtiment à l'extérieur du bâtiment, ainsi que
- un autre échangeur thermique (2) qui est disposé dans l'autre boîtier (3), et à travers de celui coule un a courant d'air d'échappement (13) et un courant d'air amené (15),
et dans lequel une unité de contrôle est pourvue qui est connectée avec le premier et l'autre dispositif de renouvellement d'air (1) de sorte que la fréquence de rotation des pales de ventilateur du ventilateur d'air amené et la fréquence de rotations des pales de ventilateur du ventilateur d'air d'échappement sont modifiable de manière que le courant d'air amené chez le premier dispositif de renouvellement d'air (1, 28) est plus fort que le courant d'air d'échappement, et le courant d'air d'échappement chez l'autre dispositif de renouvellement d'air est plus fort que le courant d'air amené, dans lequel un mouvement d'air du premier dispositif de renouvellement d'air (1) à l'autre dispositif de renouvellement d'air (1) est produit et ce mouvement d'air est modifiable par changement des fréquences de rotation du ventilateur d'air amené (16) et du ventilateur d'air d'échappement (21).

2. Système de renouvellement d'air selon revendication 1, **caractérisé en ce que**
au moins un mur extérieur (17) du bâtiment est pourvu, dans lequel les faces arrières des dispositifs de renouvellement d'air (1) sont arrangés au mur extérieur (17) et **en ce que** au moins une connexion de tube est pourvu au mur extérieur ou dedans le même vers l'extérieur du bâtiment (23).

3. Système de renouvellement d'air selon revendication 2, **caractérisé en ce que**
au moins un dispositif de renouvellement d'air (1) est pourvu à un premier mur extérieur et au moins un autre dispositif de renouvellement d'air (1) est arrangé à un autre mur extérieur qui est en particulier arrangée face au mur extérieur.

4. Système de renouvellement d'air selon revendication 3, **caractérisé en ce que**
le premier mur extérieur (17) et le second mur extérieur (17) sont situés dans des pièces différentes (24-26) du bâtiment.

5. Système de renouvellement d'air selon revendication 4, **caractérisé en ce que**
au moins un passage et/ou au moins une autre pièce est situé entre le premier mur extérieur (17) et le second mur extérieur (17).
